# FASCICULE DE BREVET EUROPEEN

(11) **EP 0 713 354 B1**
(45) Date de publication et mention de la délivrance du brevet: **20.03.2002**
(21) Numéro de dépôt: 95420291.7
(22) Date de dépôt: 24.10.1995
(51) Int. Cl.: H05F 3/02, B29C 43/30, B29D 31/00

(54) **Matériau en feuille conducteur de l'électricité obtenu à partir de granules de matière thermoplastique**
Aus thermoplastischem Granulat erhaltene, elektrisch leitfähige Folie
Electrically conductive sheet obtained from thermoplastic pellets

(30) Priorité: 17.11.1994 FR 9413989
(43) Date de publication de la demande: 22.05.1996
(73) Titulaire: GERFLOR, 69100 Villeurbanne (FR)
(72) Inventeur: Hinault, Robert, F-69005 Lyon (FR); Gonnu, Michel, F-69170 Tarare (FR)
(74) Mandataire: Vuillermoz, Bruno

(56) Documents cités:
- EP-A- 0 226 946
- EP-A- 0 512 197
- FR-A- 2 010 360
- GB-A- 649 043
- US-A- 2 083 201
- US-A- 3 322 872
- DATABASE WPI Section Ch, Week 7625 Derwent Publications Ltd., London, GB; Class A32, AN 76-46849X XP002019172 & JP-A-51 050 965 ( MATSUSHITA ELEC WKS) , 7 Mai 1976
- PATENT ABSTRACTS OF JAPAN vol. 005, no. 097 (M-075), 24 Juin 1981 & JP-A-56 042616 (LONSEAL CORP), 20 Avril 1981,
- DATABASE WPI Section Ch, Week 8227 Derwent Publications Ltd., London, GB; Class A84, AN 82-55864E XP002019173 & JP-A-57 085 446 ( LONSEAL CORP) , 28 Mai 1982
- PATENT ABSTRACTS OF JAPAN vol. 008, no. 120 (M-300), 6 Juin 1984 & JP-A-59 024627 (TOUYOU RINORIYUUMU KK), 8 Février 1984,

## Description

Il a été proposé depuis fort longtemps de réaliser des feuilles, plaques, notamment pour revêtements de sols, à partir de matières thermoplastiques.

Parmi les différentes techniques mises en oeuvre pour réaliser de tels revêtements, et plus particulièrement des revêtements de sols, il a été proposé de déposer sur un support continu, temporaire ou pouvant rester intégré au revêtement final, des granulés, en PVC par exemple, l'ensemble étant calandré et passant dans un tunnel de traitement proprement dit où l'on réalise une opération de chauffage et de calandrage suivie d'un refroidissement, la feuille obtenue recevant ensuite un traitement final de surface avant soit d'être enroulée sous la forme d'une bande de grande longueur, soit découpée en plaques ou dalles.

Un tel procédé qui présente l'avantage de permettre une production à la continue, à grande vitesse, conduit à des revêtements de sols ayant de très bonnes caractéristiques (résistance à l'usure, au poinçonnement), mais conduit à des produits d'aspect uniforme pouvant présenter comme décor un effet de "granité" ou présentant des taches colorées de forme aléatoire.

Une telle technique ressort notamment du FR-A-1 308 603 et des EP-A-046 526 et 227 029.

Il a été également proposé, comme cela ressort du GB-A-649 043, du JP-A-51 050 965 ainsi que de l'US-A-2 083 201, de réaliser des matériaux sous forme de feuille obtenu à partir de granulés de matières thermoplastiques, lesdits granulés étant préparés à partir d'un complexe comportant au moins trois couches de matières thermoplastiques, la ou les couches intermédiaires n'étant pas visibles à travers les couches de surface et pouvant être d'un coloris différent de ces dernières. Après conformation sous forme de feuille, le matériau obtenu comporte des motifs produits par la déformation des granulés sous l'action de la pression, et peut présenter un réseau de veines formées par la tranche de la ou des couches intermédiaires des granulés de base.

Or on a trouvé, et c'est ce qui fait l'objet de la présente invention, un procédé pour la réalisation d'un matériau en feuille conducteur de l'électricité, obtenu à partir de granulés de matières thermoplastiques, PVC notamment, utilisable comme revêtements de sol ou de parois, qui consiste à déposer sur un support continu, temporaire ou destiné à être incorporé dans le produit fini, une couche régulière de granulés que l'on calandre et auxquels on fait subir un traitement thermique associé à un calandrage suivi d'un refroidissement, ladite feuille présentant après réalisation des motifs imbriqués les uns dans les autres et obtenus par l'écrasement desdits granulés, et dans lequel :
- les granulés entrant dans son élaboration sont préparés à partir d'un complexe comportant au moins trois couches de matière thermoplastique, la ou les couche(s) intermédiaire(s) n'étant pas visible(s) à travers les couches de surface et étant d'un coloris différent de ces dernières et étant constituée(s) par un film conducteur d'électricité ;
- après conformation sous forme de feuille, les motifs obtenus par la déformation des granulés sous l'action de la pression comportent un réseau de veines formé par la tranche de la ou des couches intermédiaires des granulés.

Conformément à l'invention, pour obtenir un revêtement de sol dissipateur ou conducteur de l'électricité, on utilise comme couche interne du complexe permettant l'obtention des granulés, un film conducteur, par exemple un film de PVC plastifié chargé de noir de carbone dans la masse.

Par ailleurs, le complexe de base permettant la réalisation des granulés est tel que les couches externes soient suffisamment opaques et épaisses pour que la ou les couches intermédiaires ne puissent être visibles depuis l'extérieur, l'épaisseur minimale du film constituant ces couches étant de l'ordre de 300 microns (1 micron = 1 µm).

De plus, les granulés réalisés dans un tel complexe de départ doivent être de taille importante, supérieure à 2 millimètres. En effet, pour des granulés ayant une dimension inférieure, en général comprise entre 0,5 et 2 millimètres, il n'y a pas formation de motifs mais apparition de simples points en surface ; pour obtenir un aspect veiné, il est nécessaire d'utiliser un spectre de granulés compris au minimum entre 2 et 10 millimètres et de préférence entre 5 et 20 millimètres, la longueur des veines dépendant de la taille dudit granulé.

Enfin, l'épaisseur de la couche intermédiaire conditionnera la finesse des veines du motif. Cette épaisseur peut varier de 100 microns à un millimètre et plus si l'on souhaite obtenir des veines grossières. Pour un revêtement de sol, le bon compromis entre finesse des dessins et perception au sol se situe à environ 250 microns.

L'invention et les avantages qu'elle apporte sera cependant mieux comprise grâce aux exemples de réalisation donnés ci-après et qui sont illustrés par les figures annexées dans lesquelles :
- la figure 1 illustre d'une manière schématique, en coupe, le complexe de base à partir duquel sont produits les granulés permettant la réalisation du produit conforme à l'invention ;
- la figure 2 représente de manière schématique la structure d'un granulé permettant la réalisation d'un tel matériau ;
- la figure 3 est une reproduction d'un matériau conforme à l'invention obtenu à partir de granulés dont la couche intermédiaire est constituée par un film de PVC chargé de noir de carbone le rendant conducteur et les couches externes de deux films en PVC respectivement dans un ton gris clair et gris foncé.

Pour la réalisation d'un matériau conforme à l'invention, on procède de la manière suivante.

### Exemple

Dans une première phase, on prépare un complexe multicouches à partir de feuilles élémentaires de matières thermoplastiques, PVC notamment, l'assemblage des différents constituants étant réalisé par thermocollage.

Conformément à l'invention, on réalise deux revêtements conformes à l'invention à partir de deux complexes (1,2) à base de films thermoplastiques (PVC), la couche interne (3) étant constituée par un film PVC plastifié, chargé en noir de carbone dans la masse le rendant conducteur.

Les deux films externes (1,2) sont respectivement de couleur gris clair et anthracite et ont une épaisseur de 250 microns, alors que le film conducteur (3), de coloris noir, a une épaisseur de 400 microns dans le premier essai et de 250 microns dans le second.

Dans le cas présent, le complexe est constitué pour les couches externes (1,2), de deux films de PVC ayant une épaisseur de 400 microns, l'un (1) étant de couleur gris clair, l'autre (2) de coloris anthracite, la couche intermédiaire (3) étant quant à elle constituée d'un film également en PVC, de coloris jaune, ayant une épaisseur de 250 microns.

L'assemblage des trois couches est réalisé à la continue par l'intermédiaire de deux calandres successives, la couche interne étant associée à une couche externe par passage à l'intérieur de la première calandre puis, la seconde couche externe étant rapportée sur l'autre face de la couche interne. L'assemblage est réalisé à une vitesse de cinq mètres par minute (5m/min), la température permettant le thermocollage étant de l'ordre de 140 à 150°C.

Un tel complexe est ensuite transformé en granulés par broyage, granulés dont l'épaisseur (e) est de 1,5 millimètre, le broyage étant réalisé dans des conditions telles que les autres dimensions (L et h) des granulés soient comprises dans un spectre allant de 2 à 10 millimètres, voire même plus.

Dans le cas présent, le film conducteur interne (3) présente une résistivité transversale mesurée selon la norme ISO 3915 inférieure à 100 ohms/cm.

De manière connue, et comme cela ressort notamment de l'EP-A-227 129, sur une chaine de production conventionnelle, comportant un tapis transporteur sur lequel est disposé un papier transfert, on distribue ces granulés à raison de 2500 grammes/mètre carré, de manière à ce qu'ils se répartissent sur le support de manière aléatoire en formant une couche ayant une épaisseur de 4,5 millimètres.

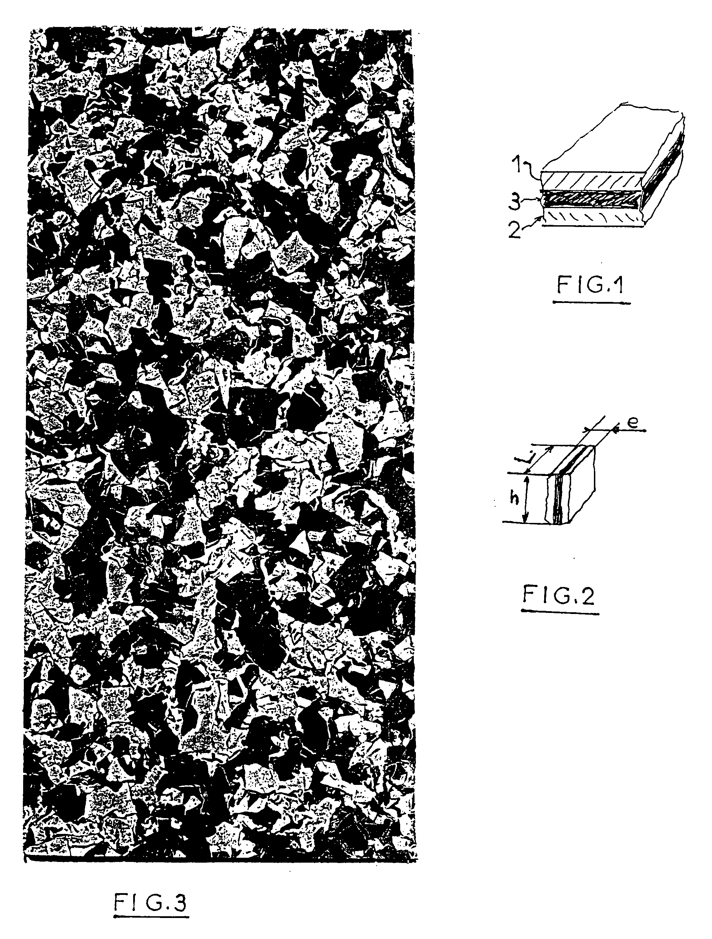

Après traitement thermique et compression on obtient, en sortie de la chaine, une feuille ayant une épaisseur de 2 millimètres et dont l'aspect est tel qu'il ressort de la figure 3. On a ainsi un aspect marbré, bicolore, constitué de surfaces imbriquées les unes dans les autres, respectivement de couleur gris clair et gris foncé. A l'intérieur de la surface, apparaissent de fines veines constituées par l'apparition en surface de la couche intermédiaire des granulés.

A partir de la feuille ainsi réalisée, on forme des dalles ayant une dimension de 300 x 300 cm et une épaisseur de 2 millimètres. Ces dalles sont obtenues par découpe.

Les résistivités transversales mesurées selon la nature des faits isosol, a permis de constater que pour la dalle A, la résistivité transversale pour les deux dalles est inférieure à 10⁴ ohms ; par suite, même avec un film intermédiaire d'épaisseur relativement faible (250 microns), le réseau de veines obtenu après pressage est bien continu et la résistivité obtenue est très proche de celle du film de base utilisé.

Les exemples qui précèdent montrent bien les avantages apportés par l'invention, tant sur le plan esthétique que sur le plan fonctionnel.

En effet, à ce jour, lorsque l'on souhaite réaliser des revêtements électroconducteurs, on procède très souvent par moulage de granulés enrobés de carbone, ce qui après tranchage, fait apparaître une résille noire à la surface des revêtements de sols. Un tel procédé est particulièrement salissant et coûteux, car discontinu, et ne permet que la production de dalles et non pas celle de revêtements de grande longueur.

Une autre technique, voir, par exemple, FR-A-2 010 360, consiste à introduire des granulés conducteurs noirs, mais cette technique implique généralement d'avoir un film conducteur en sous-couche et surtout, limite les possibilités de couleur et exclut la production de matériaux homogènes en forte épaisseur (2 millimètres et plus).

Or le nouveau type de procédé conforme à l'invention permet de produire un matériau qui non seulement a un aspect esthétique original (effet marbré avec de fines veines), mais surtout autorise la production de matériaux homogènes, conducteurs ou dissipateurs, efficaces, qui peuvent être obtenus directement à partir d'un seul type de granulé et se présenter aussi bien sous la forme de dalles que de lés de grande longueur.

Par ailleurs, il pourrait être envisagé d'associer au film conducteur interne (3) un ou plusieurs films additionnels pouvant avoir une coloration différente des films externes et du film conducteur, permettant ainsi d'obtenir à l'intérieur des motifs des veines colorées différemment de la couche interne.

A titre d'exemple, si l'on associe au film PVC conducteur un film également en PVC, par exemple de coloris jaune, on obtiendra en surface non seulement un aspect marbré bicolore, constitué de surfaces imbriquées les unes dans les autres respectivement de couleur gris clair et gris foncé obtenue par les couches externes et, à l'intérieur de cette dernière, de fines veines colorées en noir et en jaune constituées par l'apparition en surface des couches intermédiaires, lesdites veines étant réparties de façon aléatoire et mélangées les unes aux autres.

## Revendications

1. Procédé pour la réalisation d'un matériau en feuille conducteur d'électricité, obtenu à partir de granulés de matières thermoplastiques, PVC notamment, utilisable comme revêtements de sol ou de parois, qui consiste à déposer sur un support continu, temporaire ou destiné à être incorporé dans le produit fini, une couche régulière de granulés que l'on calandre et auxquels on fait subir un traitement thermique associé à un calandrage suivi d'un refroidissement, ladite feuille présentant après réalisation des motifs imbriqués les uns dans les autres et obtenus par l'écrasement desdits granulés, et dans lequel
- les granulés entrant dans son élaboration sont préparés à partir d'un complexe comportant au moins trois couches (1,2,3) de matière thermoplastique, la ou les couche(s) intermédiaire(s) (3) n'étant pas visible(s) à travers les couches de surface (1,2) et étant d'un coloris différent de ces dernières et étant constituée(s) par un film conducteur d'électricité;
- après conformation sous forme de feuille, les motifs obtenus par la déformation des granulés sous l'action de la pression comportent un réseau de veines formé par la tranche de la ou des couches intermédiaires (3) des granulés.

2. Procédé selon la revendication 1, **caractérisé en ce que** le complexe de base permettant la réalisation des granulés est tel que les couches externes (1,2) sont suffisamment opaques et épaisses pour que la ou les couches intermédiaires (3) ne puissent être visibles depuis l'extérieur.

3. Procédé selon la revendication 2, **caractérisé en ce que** l'épaisseur des films constituant les couches externes (1,2) est de l'ordre de 300 µm (microns).

4. Procédé selon la revendication 2, **caractérisé en ce que** les granulés permettant de le réaliser ont une taille supérieure à 2 millimètres, et de préférence comprise entre 5 et 20 millimètres.

5. Procédé la revendication 2, **caractérisé en ce que** l'épaisseur de la couche interne (3) est comprise entre 100 µm (microns) et un millimètre.

6. Procédé selon l'une des revendications 1 à 5, **caractérisé en ce que** la couche interne est constituée par un film de PVC plastifié chargé en noir de carbone dans la masse le rendant conducteur.

## Patentansprüche

1. Verfahren zur Herstellung eines elektrisch leitfähigen Folienmaterials, welches aus Granulaten aus thermoplastischen Materialien, insbesondere PVC, erhalten wird und als Boden- oder Wandbelag verwendbar ist, bestehend aus dem Aufbringen einer gleichmäßigen Schicht der Granulate auf einem temporären oder zur Einbettung in das Fertigprodukt vorgesehenen kontinuierlichen Träger, welche Schicht kalandriert und einer einer Kalandrierung zugeordneten thermischen Behandlung unterzogen wird, auf die ein Abkühlen folgt, wobei die genannte Folie nach der Herstellung ineinander verschachtelte Muster aufweist, die durch das Zusammendrücken der genannten Granulate erhalten werden, bei dem:
- die in seine Herstellung eingehenden Granulate aus einem Komplex hergestellt sind, der mindestens drei Schichten (1,2,3) aus thermoplastischem Material aufweist, wobei die Zwischenschicht(en) (3) nicht durch die Oberflächenschichten (1,2) hindurch sichtbar ist (sind) und eine andere Farbe als die zuletzt genannten aufweist (aufweisen) und aus einem elektrisch leitfähigen Film gebildet ist (sind);
- nach Bildung in Form einer Folie die durch die Verformung der Granulate unter Wirkung des Drucks erhaltenen Muster ein Adernetz aufweisen, welches durch die Schnittfläche der Zwischenschicht(en) (3) der Granulate gebildet ist.

2. Verfahren nach Anspruch 1, **dadurch gekennzeichnet, daß** der Ausgangskomplex, der die Herstellung der Granulate ermöglicht, derart ist, daß die äußeren Schichten (1,2) hinreichend opak und dick sind, so daß die Zwischenschicht(en) (3) von außen nicht sichtbar ist (sind).

3. Verfahren nach Anspruch 2, **dadurch gekennzeichnet, daß** die Dicke der die Außenschichten (1,2) bildenden Filme eine Größenordnung von 300 µm (Mikron) aufweist.

4. Verfahren nach Anspruch 2, **dadurch gekennzeichnet, daß** die seine Durchführung ermöglichenden Granulate eine Größe von mehr als 2 Millimetern und vorzugsweise zwischen 5 und 20 Millimetern aufweisen.

5. Verfahren nach Anspruch 2, **dadurch gekennzeichnet, daß** die Dicke der inneren Schicht (3) zwischen 100 µm (Mikron) und einem Millimeter liegt.

6. Verfahren nach einem der Ansprüche 1 bis 5, **dadurch gekennzeichnet, daß** die innere Schicht von einem plastifizierten PVC-Film gebildet wird, der mit Ruß in seiner Kunststoffmasse durchsetzt ist, um leitfähig zu werden.

## Claims

1. Process for producing an electrically conductive sheet material obtained from granules of thermoplastics, especially PVC, useable as floor or wall coverings, which consists in depositing, on a continuous backing which is temporarily or intended to be incorporated into the finished product, a uniform layer of granules, which are calendered and undergo a heat treatment associated with calendering followed by cooling, the said sheet having mutually imbricated obtained by flattening the said granules, and in which process:
- the granules used in its manufacture are produced from a complex having at least three layers (1, 2, 3) of thermoplastic, the intermediate layer or layers (3) not being visible through the surface layers (1, 2) and being of a different colour from the surface layers and consisting of an electrically conductive film;
- after shaping in the form of sheets, the patterns obtained by deformation of the granules by the action of the pressure comprise a network of veins formed by the edge of the intermediate layer or layers (3) of the granules.

2. Process according to Claim 1, **characterized in that** the base complex allowing the production of granules is such that the external layers (1, 2) are sufficiently opaque and thick for the intermediate layer or layers (3) not to be visible from the outside.

3. Process according to Claim 2, **characterized in that** the thickness of the films constituting the external layers (1, 2) is about 300 µm (microns).

4. Process according to Claim 2, **characterized in that** the granules allowing it to be carried out have a size of greater than 2 millimetres and preferably between 5 and 20 millimetres.

5. Process according to Claim 2, **characterized in that** the thickness of the internal layer (3) is between 100 µm (microns) and 1 millimetre.

6. Process according to one of Claims 1 to 5, **characterized in that** the internal layer consists of a plasticized PVC film bulk-filled with carbon black to make it conductive.
